(19) Europäisches Patentamt
European Patent Office
Office européen des brevets

(11) EP 4 410 851 A1

(12) EUROPEAN PATENT APPLICATION
published in accordance with Art. 153(4) EPC

(43) Date of publication:
07.08.2024 Bulletin 2024/32

(21) Application number: 21959536.0

(22) Date of filing: 30.09.2021

(51) International Patent Classification (IPC):
C08F 216/06 (2006.01) C08F 218/08 (2006.01)
C08F 220/06 (2006.01) C08F 220/10 (2006.01)
C08L 29/04 (2006.01) C08L 53/00 (2006.01)
C08J 5/22 (2006.01) H01M 50/446 (2021.01)

(52) Cooperative Patent Classification (CPC):
C08F 216/06; C08F 218/08; C08F 220/06;
C08F 220/10; C08J 5/22; C08L 29/04; C08L 53/00;
H01M 50/446; Y02E 60/10

(86) International application number:
PCT/KR2021/013434

(87) International publication number:
WO 2023/054765 (06.04.2023 Gazette 2023/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.09.2021 KR 20210128913

(71) Applicant: Hansol Chemical Co., Ltd
Seoul 06169 (KR)

(72) Inventors:
- LEE, Go-Eun
Wanju-gun, Jeollabuk-do 55321 (KR)
- JANG, Bo-Ok
Wanju-gun, Jeollabuk-do 55321 (KR)
- KIM, Jin-Yeong
Wanju-gun, Jeollabuk-do 55321 (KR)
- KIM, Seung-Heon
Wanju-gun, Jeollabuk-do 55321 (KR)
- PARK, Jun
Wanju-gun, Jeollabuk-do 55321 (KR)
- OH, Sae-Wook
Wanju-gun, Jeollabuk-do 55321 (KR)
- KWON, Se-Man
Wanju-gun, Jeollabuk-do 55321 (KR)

(74) Representative: Cabinet Laurent & Charras
Le Contemporain
50 Chemin de la Bruyère
69574 Dardilly Cedex (FR)

# (54) COPOLYMER FOR SEPARATOR, AND SECONDARY BATTERY COMPRISING SAME

(57) The present invention relates to a copolymer, a slurry composition using same, a separator, and a secondary battery, the copolymer comprising, relative to 100 weight% of the total weight of the copolymer: 3 weight% to 38 weight% of vinyl acetate-based monomer unit; 57 weight% to 81 weight% of vinyl alcohol-based monomer unit; 0.7 weight% to 18 weight% of acrylate-based monomer unit; 14 weight% to 38 weight% of acrylic acid-based monomer unit; and less than 1 weight% of amine organic compound.

EP 4 410 851 A1

## Description

### Technical Field

The present disclosure relates to a copolymer, a slurry composition using the same, a separator, and a secondary battery.

### Background Art

With high energy density, lithium secondary batteries are being used extensively in electrical, electronic, telecommunication, and computer industries. Additionally, application fields of lithium secondary batteries are being expanded to high-capacity secondary batteries for hybrid vehicles, electric vehicles, and the like, in addition to small lithium secondary batteries for portable electronic devices.

Although the insulation of lithium-ion secondary batteries is enabled by separators, internal or external battery abnormalities, or shocks cause a short circuit between positive and negative electrodes, which may lead to heat generation and explosion. Thus, ensuring the thermal and chemical safety of the separator is extremely important.

Currently, polyolefin-based films are being used widely as separators, but polyolefins have the disadvantages of severe heat shrinkage at high temperatures and poor mechanical properties.

To improve the stability of such polyolefin-based separators, a porous separator in which a polyolefin porous substrate film is coated with a mixture of inorganic particles and a binder has been developed.

That is, to suppress battery instability due to dendrite and heat shrinkage of polyolefin-based separators caused by high temperatures, one or both sides of the porous separator substrate are coated with the inorganic particles also in combination with the binder. Accordingly, the inorganic particles can provide the function of suppressing the shrinkage rate of the substrate. At the same time, a further safe separator can be manufactured by the coating layer.

To obtain excellent battery characteristics, the coating layer is required not only to be evenly coated but also to have strong adhesive strength to the substrate.

Additionally, to cope with the recent high capacity and high output of batteries, the heat resistance of existing separators needs to be further improved.

[Document of related art]

[Patent Document]

(Patent Document 2) Korean Patent No. 10-1430975
(Patent Document 1) Korean Patent Application Publication No. 10-2006-0072065

## Disclosure

### Technical Problem

Accordingly, the present disclosure aims to provide a copolymer capable of increasing the dispersion stability of a slurry composition.

Additionally, the present disclosure aims to provide a slurry composition having excellent adhesive strength with the use of the copolymer.

Furthermore, the present disclosure aims to provide a separator having excellent heat resistance by applying the slurry composition and a battery having excellent performance with the use of the separator.

However, the problems to be solved by the present disclosure are not limited to the above description, and other problems can be clearly understood by those skilled in the art from the following description.

### Technical Solution

In a first aspect of the present application, a copolymer including a vinyl acetate-based monomer unit in an amount of 3 wt% or greater and 38 wt% or less, a vinyl alcohol-based monomer unit in an amount of 57 wt% or greater and 81 wt% or less, an acrylate-based monomer unit in an amount of 0.7 wt% or greater and 18 wt% or less, an acrylic acid-based monomer unit in an amount of 14 wt% or greater and 38 wt% or less, and

an amine-based organic compound in an amount of less than 1 wt%, based on 100 wt% of the total weight of the copolymer,
is provided.

In a second aspect of the present application, a slurry composition including the copolymer and

inorganic particles
is provided.

In a third aspect of the present application, a separator containing the slurry composition
is provided.

In a fourth aspect of the present application, a secondary battery including the separator
is provided.

## Advantageous Effects

A copolymer of the present disclosure can improve the dispersion stability of a slurry composition, increase adhesive strength to a polyolefin film, which is a separator substrate, and improve the heat resistance of a separator.

## Best Mode

Hereinafter, the action and effect of the present disclosure will be described in detail through specific embodiments of the disclosure. However, these embodiments are provided only for illustrative purposes, and the scope of the present disclosure is not limited to the following embodiments.

All terms including technical and scientific terms used herein have the same meaning as commonly understood by those skilled in the art to which the present disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Therefore, the configuration of embodiments described herein are merely examples and do not exhaustively present the technical spirit of the present disclosure. Accordingly, it should be appreciated that there may be various equivalents and modifications that can replace the embodiments and the configurations at the time at which the present disclosure is filed.

As used herein, the singular forms are intended to include the plural forms as well, unless the context clearly indicates otherwise. It will be further understood that the terms "comprise", "include", "have", etc. when used herein, specify the presence of stated features, integers, steps, components, or combinations thereof but do not preclude the presence or addition of one or more other features, integers, steps, components, or combinations thereof.

As used herein to represent a specific numerical range, the expression "a to b" means "$\geq$ a and $\leq$ b".

A copolymer, according to a first aspect of the present application, may include: a vinyl acetate-based monomer unit in an amount of 3 wt% or greater and 38 wt% or less; a vinyl alcohol-based monomer unit in an amount of 57 wt% or greater and 81 wt% or less; an acrylate-based monomer unit in an amount of 0.7 wt% or greater and 18 wt% or less; an acrylic acid-based monomer unit in an amount of 14 wt% or greater and 38 wt% or less; and an amine-based organic compound in an amount of less than 1 wt%, based on 100 wt% of the total weight of the copolymer.

The copolymer is prepared through copolymerization of the vinyl acetate and acrylate monomers, alkaline hydrolysis, and reaction with the amine-based organic compound.

The hydrolysis causes a part of the vinyl acetate-based monomer unit to be converted into the vinyl alcohol-based monomer unit and a part of the acrylate-based monomer unit to be converted into the acrylic acid-based monomer unit.

The degree of such hydrolysis may be adjusted to, for example, 70% or greater, 75% or greater, 80% or greater, 85% or greater, 90% or greater, or 95% or greater.

When the content of the monomer unit does not fall within the above numerical range, one or more among the dispersion stability of a slurry composition to which the copolymer is applied, the adhesive strength of a coating film, and the heat resistance of a separator may be poor.

The amine-based organic compound may be configured to decrease the glass transition temperature (Tg) of the copolymer and cause softening.

This is because a terminal, being ionized by metal, of the acrylic acid-based monomer units of the copolymer is substituted with the amine-based organic compound to form ionic bonds, and the aggregation properties of the chains of the copolymer are improved by the action of electrostatic repulsion or the large volume of such a bonded amine-based

organic compound.

As the chains unfold rather than aggregate, the glass transition temperature of the copolymer may be decreased.

The effect of the amine-based organic compound in decreasing the glass transition temperature and softening the chains may improve the effect of physically bonding the slurry composition containing the copolymer to the inorganic separator substrate.

Additionally, the strong ionic bonding and physical cross-linking caused by the amine-based organic compound may alleviate the heat shrinkage of the separator, which may also affect the solubility in water.

In other words, the higher the content of the amine-based organic compound, the higher the water content of the copolymer, but the lower the solubility in water.

When the content of the amine-based organic compound is 1 wt% or greater based on 100 wt% of the total weight of the copolymer, the heat resistance of the separator manufactured using the copolymer may be poor.

Additionally, the content of the amine-based organic compound is, preferably, 0.1 wt% or greater and, more preferably, 0.2 wt% or greater, based on 100 wt% of the total weight of the copolymer.

In one example, the copolymer may be represented by Formula 1 below.

[Formula 1]

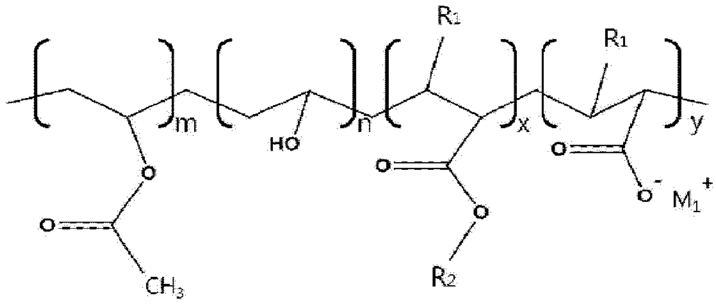

In Formula 1,

$R_1$ may be hydrogen or a straight-chain or branched-chain hydrocarbon having 1 to 4 carbon atoms,
each $R_2$ may be hydrogen or a straight-chain or branched-chain hydrocarbon having 1 to 20 carbon atoms,
$M_1$ may include one or more selected from the group consisting of secondary and tertiary amines, and
m, n, x, and y may satisfy $m + n + x + y = 1$.

In Formula 1, m, n, x, and y correspond to the mole fractions of the respective monomer units, and the sum of the mole fractions of the respective monomer units is 1.

The acrylic acid-based monomer unit of the copolymer may have a form in which the end group thereof is ionically bonded to one or more selected from the group consisting of secondary and tertiary amines.

In one example, $R_1$ in Formula 1 may include one or more selected from the group consisting of hydrogen, methyl, and ethyl.

Additionally, $R_2$ in Formula 1 may include one or more selected from the group consisting of methyl, ethyl, n-propyl, isopropyl, n-butyl, tert-butyl, n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, isopentyl, isoheptyl, isooctyl, isononyl, isodecyl, isoundecyl, isododecyl, isotridecyl, isotetradecyl, isopentadecyl, isocetyl, isohexadecyl, isoheptadecyl, isostearyl, isooctadecyl, isononadecyl, isoicosyl, isohenicosyl, and isodocosyl.

In one example, $M_1$ in Formula 1 may include one or more compounds selected from the group consisting of compounds of Formulas 2 to 5 below.

[Formula 2]

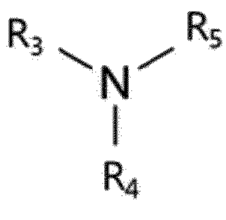

[Formula 3]

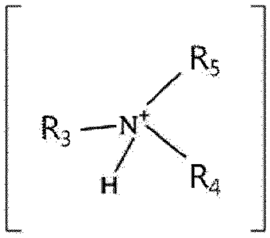

In Formulas 2 and 3, $R_3$ to $R_5$ may each independently be a straight-chain or branched-chain hydrocarbon having 1 to 6 carbon atoms.

[Formula 4]

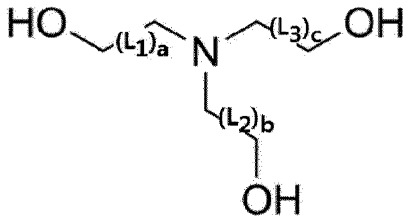

[Formula 5]

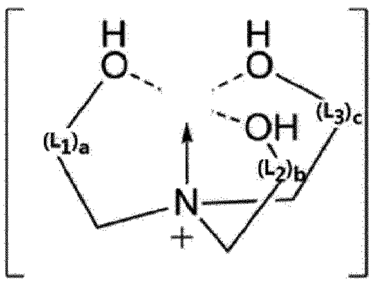

In Formulas 4 and 5, $L_1$ to $L_3$ may each independently be an alkylene group having 1 to 6 carbon atoms, and a to c may each independently be an integer of 0 to 2.

In one example, the copolymer may be a random or block copolymer depending on a synthesis process.

In one example, the copolymer may have a number average molecular weight in a range of 5,000 to 1,000,000.

When the number average molecular weight of the copolymer is less than 5,000, the fluidity of the copolymer may increase, thus deteriorating the dispersibility and the heat resistance properties of the separator. When the number average molecular weight is 1,000,000 or greater, the viscosity may be excessively high to be used, and the pores of the separator may be blocked, thus reducing air permeability and resistance.

In one example, m, n, x, and y in Formula 1 may satisfy the following expressions: $1.5 \leq (m + n)/(x + y) \leq 5.5$, $0.05 \leq m/n \leq 0.45$, and $0.05 \leq x/y \leq 0.45$.

The ratio of the monomers in the copolymer may be adjusted by varying the contents of the vinyl acetate and acrylic monomers, which are reaction starting materials, and the degree of hydrolysis.

When $(m + n)/(x + y)$ of the copolymer exceeds 5.5, the dispersion force of the copolymer may decrease. When $(m + n)/(x + y)$ is less than 1.5, the dispersion force of the copolymer may decrease while the heat resistance of the separator, to which the copolymer is applied, may be poor.

When the degree of hydrolysis is adjusted to allow m/n and/or x/y of the copolymer to be less than 0.05, the hydrophobicity of the copolymer is improved, thus increasing the adhesive strength to the substrate. However, the dispersibility of the slurry composition containing inorganic particles and the copolymer is significantly deteriorated, which is undesirable.

Additionally, when the degree of hydrolysis is adjusted to allow m/n and/or x/y of the copolymer to exceed 0.45, the hydrophobicity of the copolymer is poor, thus significantly reducing the adhesive strength to the substrate.

A slurry composition, according to a second aspect of the present application, may include the copolymer and inorganic particles.

The slurry composition may have an adhesive strength of 80 gf/mm or higher.

The inorganic particles may be used without limitation as long as the particles are insulator particles, and are preferably high dielectric constant insulator particles.

Specific examples of the inorganic particles may include $Al_2O_3$, $SiO_2$, $TiO_2$, $ZrO_2$, ZnO, NiO, CaO, $SnO_2$, $Y_2O_3$, MgO, $BaTiO_3$, $CaTiO_3$, $SrTiO_3$, SiC, $Li_3PO_4$, $Pb(Zr,Ti)O_3$(PZT), $(Pb,La)(Zr,Ti)O_3$(PLZT), and mixtures thereof.

The inorganic particles are not particularly limited in size, but the median particle diameter thereof may be, for example, in a range of 0.01 to 30 $\mu$m and is, more preferably, in the range of 0.1 m to 10 $\mu$m. When the median particle diameter of the inorganic particles is smaller than the above preferable range, dispersibility may be poor. When the median particle diameter exceeds the above preferable range, the thickness of the coating layer may be increased after coating, thus deteriorating mechanical properties.

Additionally, the inorganic particles are not particularly limited in form but may have, for example, a spherical, elliptical, or irregular form.

A separator, according to a third aspect of the present application, may include the slurry composition.

The separator may have a heat shrinkage rate of 5% or lower in both a machine direction (MD, longitudinal direction) and a transverse direction (TD, width direction).

The separator may be manufactured by coating at least one side of a porous substrate film with the slurry composition described above, or by forming the slurry composition into a film form and laminating such a formed film to the porous substrate film.

On the other hand, the separator may be used as a separator for a secondary battery, for example, a separator for a lithium secondary battery.

One example of manufacturing the separator may include: (a) preparing a polymer solution by dissolving the copolymer in a solvent, (b) obtaining a mixture by adding and mixing the inorganic particles to the polymer solution in the a) preparing, and (c) coating and drying one or more regions selected from the group consisting of the surface of a polyolefin-based separator substrate and some of pores in the substrate with the mixture of the b) obtaining.

First, 1) a polymer solution is prepared by dissolving the copolymer in an appropriate organic solvent.

Preferably, the solvent has a solubility index not inferior to that of the copolymer, used as a binder, and has a low boiling point, which is to facilitate the mixing to be uniform and the solvent to be easily removed later. Non-limiting examples of the available solvents may include acetone, tetrahydrofuran, methylene chloride, chloroform, dimethylformamide, N-methyl-2-pyrrolidone (NMP), cyclohexane, water, or mixtures thereof.

2) The mixture of the inorganic particles and the polymer is prepared by adding and dispersing the inorganic particles to the prepared polymer solution.

After adding the inorganic particles to the polymer solution, a process of dispersing the inorganic particles is preferably performed. In this case, the dispersion may be appropriately performed for 1 to 20 hours. An existing method may be used as a dispersion method, and particularly, a ball milling method is preferable.

The mixture composed of the inorganic particles and the polymer is not particularly limited in composition. However, depending on the composition of the mixture, the thickness, pore size, and porosity of the finally manufactured organic/inorganic composite porous separator of the present disclosure may be controlled.

In other words, the higher the ratio (ratio = I/P) of the inorganic particles (I) to the polymer (P), the higher the porosity of the separator, resulting in an increase in thickness of the separator under the same amount of non-volatile phase (inorganic particle weight plus polymer weight). Additionally, pores are more likely to be formed between the inorganic particles, so the pore size is larger. In this case, the larger the size (particle diameter) of the inorganic particles, the greater the interstitial distance between the inorganic particles, thus increasing the pore size.

3) The manufactured polyolefin-based separator substrate is coated with the prepared mixture of the inorganic particles and the polymer and then dried, thereby obtaining the separator of the present disclosure.

In this case, an existing coating method known in the art may be used as a method of coating the polyolefin-based separator substrate with the mixture of the inorganic particles and the polymer. For example, various methods, such as dip coating, die coating, roll coating, comma coating, or combinations of these methods, may be used. Additionally, when coating the polyolefin-based separator substrate with the mixture of the inorganic particles and the polymer, the coating may be performed on both sides of the separator substrate or selectively performed on only one side.

When using the separator in a secondary battery, lithium ions may be transferred not only through the separator substrate but also through a porous active layer, not to mention that the safety improvement effect described above may be exhibited when an external impact causes internal short circuits.

Additionally, the secondary battery may include a positive electrode, a negative electrode, the separator interposed between the positive and negative electrodes, and an electrolyte solution.

The secondary battery may be manufactured by existing methods known in the art. For example, the secondary battery is manufactured by interposing the separator between the electrodes to obtain an assembly and then injecting the electrolyte solution into the assembly.

The electrodes to be used in combination with the separator are not particularly limited. However, typical positive

electrode active materials available for positive electrodes of secondary batteries may be used as a positive electrode active material. Non-limiting examples thereof may include lithium intercalation material, such as lithium manganese oxide (lithiated magnesium oxide), lithium cobalt oxide (lithiated cobalt oxide), a lithium nickel oxide (lithiated nickel oxide), or a composite oxide formed by combinations thereof. Additionally, typical negative electrode active materials available for negative electrodes of existing electrochemical devices may be used as a negative electrode active material. Non-limiting examples thereof may include lithium intercalation material, such as lithium metal, lithium alloys, carbon, petroleum coke, activated carbon, graphite, or other carbon-based materials. Both the electrodes are configured in such forms that the respective electrode active materials, described above, are bound to a positive electrode current collector, that is, a foil made of aluminum, nickel, or combinations thereof, and a negative electrode current collector, that is, a foil made of copper, gold, nickel, copper alloys, or combinations thereof, respectively.

The electrolyte solution preferably has a form in which a salt having a structure such as A+B-, where A+ includes an alkali metal cation such as $Li^+$, $Na^+$, and $K^+$, or an ion composed of combinations thereof, and B- includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, and $C(CF_2SO_2)_3^-$, or an ion composed of combinations thereof, is dissolved and dissociated in an organic solvent composed of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (GBL), or a mixture thereof.

In addition to typical winding processes, a process of laminating and folding the separator and the electrodes is usable as a process of applying the separator to a battery.

## Mode for Invention

Hereinafter, the present application will be described in more detail using examples, but the present application is not limited thereto.

[Preparation Example 1] Preparation of copolymer

Distilled water in an amount of 200 parts by weight and an emulsifier in an amount of 0.1 to 3 parts by weight with respect to 100 parts by weight of a monomer mixture (vinyl acetate-based and (meth)acrylate-based monomers) were added to a reaction vessel, stirred, and heated to a temperature of 60°C while injecting high-purity nitrogen gas thereinto. The monomer mixture and potassium persulfate, a degradable initiator, in an amount of 0.1 to 0.5 parts by weight with respect to the monomer mixture in an amount of 100 parts by weight were each independently added to the reaction vessel prepared at a temperature of 60°C to perform continuous emulsion polymerization, thereby preparing vinyl acetate-based and (meth)acrylate-based copolymers.

The copolymers prepared through the emulsion polymerization were heated to a temperature of 60°C in an alcohol solvent in an amount of 2 to 5 times the weight thereof for expansion or dissolution. The copolymers were synthesized by adding an aqueous solution of metal hydroxides (NaOH, LiOH, and KOH) and allowing hydrolysis to occur.

An amine-based organic compound was added to the copolymers and reacted to prepare a binder copolymer.

[Preparation Example 2] Preparation of porous film-coating slurry

Inorganic particles (alumina having a median particle diameter of 0.5 μm) and the binder copolymer prepared by Preparation Example 1 were mixed to a ratio (non-volatile phase weight ratio) of 96:4. Then, distilled water was added and mixed to a non-volatile phase concentration of 35%. The resulting mixture was sufficiently dispersed using a ball milling method or mechanical stirrer, thereby preparing a porous film-coating slurry.

[Preparation Example 3] Manufacturing of separator

A polyolefin porous substrate (polyethylene (PE), polypropylene (PP), and the like) was coated with the porous film-coating slurry prepared by Preparation Example 2 to form an inorganic coating layer. Various methods, such as dip coating, die coating, gravure coating, comma coating, and the like, were available as a coating method.

Additionally, methods, including warm air drying, hot air drying, vacuum drying, infrared drying, and the like, were used for drying after the coating, where the drying temperature was in a range of 60°C to 85°C.

The inorganic coating layer formed on one or both sides had a thickness in a range of 1 to 6 μm. When the thickness was smaller than 1 μm, there was a problem in that the heat resistance of the separator was significantly poor. When the thickness exceeded 6 μm, the thickness of the separator was excessively large, resulting in a decrease in battery energy density and an increase in battery resistance.

[Examples 1 to 5 and Comparative Examples 1 to 7]

Binder copolymers of Examples 1 to 5 were prepared according to Preparation Example 1 by adjusting the composition ratio of the monomers, degree of hydrolysis, and content of the amine-based organic compound, as shown in Table 1 below.

Vinyl acetate (VC) and methyl methacrylate (MMA) were used as the monomers, and triethanol amine (TA) was used as the amine-based organic compound.

Using the binder copolymers prepared by Examples 1 to 5 and Comparative Examples 1 to 7, porous film-coating slurries and separators were prepared and manufactured according to Preparation Examples 2 and 3, respectively.

However, in Comparative Examples 3 and 4, poly(vinyl acetate) and poly(methyl methacrylate) were used instead of copolymers, respectively.

[Table 1]

| Classification | Copolymer monomer (weight ratio) | | Hydrolysis rate (%) | TA (content compared to entire copolymer) (wt%) |
|---|---|---|---|---|
| | VA | MMA | | |
| Example 1 | 75 | 25 | 90 | 0.2 |
| Example 2 | 60 | 40 | 90 | 0.2 |
| Example 3 | 75 | 25 | 80 | 0.2 |
| Example 4 | 75 | 25 | 95 | 0.2 |
| Example 5 | 75 | 25 | 90 | 0.4 |
| Comparative Example 1 | 90 | 10 | 90 | 0.2 |
| Comparative Example 2 | 50 | 50 | 90 | 0.2 |
| Comparative Example 3 | 100 | 0 | 90 | 0.2 |
| Comparative Example 4 | 0 | 100 | 90 | 0.2 |
| Comparative Example 5 | 75 | 25 | 65 | 0.2 |
| Comparative Example 6 | 75 | 25 | 90 | 0 |
| Comparative Example 7 | 75 | 25 | 90 | 1 |

[Evaluation Example 1] Particle diameter of inorganic particles in porous film-coating slurry

Using the binder copolymers of Examples 1 to 5 and Comparative Examples 1 to 7, 0.05 g of each porous film-coating slurry, prepared according to Preparation Example 2, was added to 30 g of distilled water and diluted. About 3 ml of the diluted pretreatment sample was injected into a particle size analyzer to analyze the particle size using dynamic light scattering.

[Evaluation Example 2] Adhesive strength of porous film-coating slurry

Using the binder copolymers of Examples 1 to 5 and Comparative Examples 1 to 7, each separator, manufactured according to Preparation Example 3, was cut to a size with a width of 18 mm and a length of 100 mm.

A double-sided tape having an area with a width of 20 mm and a length of 40 mm was attached to an acrylic plate having an area with a width of 40 mm and a length of 100 mm. Such a prepared separator was attached to the

double-sided tape and then lightly pressed five times with a hand roller. The specimen prepared above was mounted on UTM (20 kgf load cell) so that one part of the separator was fixed to the upper clip of the tensile strength machine while fixing the bottom part of the tape, attached to one side of the separator, onto the lower clip to measure 180° peel strength at a speed of 100 mm/min. The average value thereof was calculated through measurement performed on five or more specimens prepared per sample.

[Evaluation Example 3] Heat shrinkage rate of separator

Using the binder copolymers of Examples 1 to 5 and Comparative Examples 1 to 7, each separator, manufactured according to Preparation Example 3, was cut to prepare specimens having a width of 5 cm and a length of 100 mm. These specimens were left in an oven at a temperature of 150°C for 1 hour, and then the shrinkage rate was measured.

The measurement results for the binder copolymers, the porous film-coating slurries, and the separators, measured by Evaluation Examples 1 to 3, are shown in Table 2 below.

[Table 2]

| Classification | Median particle size of inorganic particles in slurry composition (nm) | Adhesive strength (gf/mm) | Heat shrinkage rate (%) [MD/TD] |
|---|---|---|---|
| Example 1 | 735 | 93 | 4.5/5 |
| Example 2 | 747 | 116 | 4/5 |
| Example 3 | 766 | 110 | 3.5/5 |
| Example 4 | 730 | 88 | 3/5 |
| Example 5 | 722 | 100 | 3.5/4.5 |
| Comparative Example 1 | 753 | 110 | 4/4 |
| Comparative Example 2 | 858 | 132 | 3.5/5.5 |
| Comparative Example 3 | 768 | 122 | 7/8 |
| Comparative Example 4 | 756 | 76 | 20/21 |
| Comparative Example 5 | 808 | 128 | 7/9 |
| Comparative Example 6 | 764 | 83 | 5/6.5 |
| Comparative Example 7 | 721 | 95 | 5/5.5 |

First, from the measurement results for the median particle size of the inorganic particles in the slurry composition, in the case of Comparative Examples 1 to 4, where the conditions, other than the weight ratio of VA to MMA that did not fall within the range (VA:MMA = 1.5:1 to 3:1), were the same as those of Examples 1 and 2, the median particle size of the inorganic particles in each slurry composition was larger than that in the case of Examples 1 and 2, confirming that the dispersion stability was poor.

In particular, in the case of Comparative Examples 2 to 4, the heat shrinkage rate in at least one of the MD and TD directions exceeded 5%, confirming that the heat resistance was poor.

Additionally, in the case of Comparative Example 5, where the hydrolysis rate was lower than that in the case of Examples 1, 3, and 4, the median particle size of the inorganic particles in the slurry composition was large, confirming that the dispersion stability was poor.

In particular, in the case of Comparative Example 5, the heat shrinkage rates in both the MD and TD directions exceeded 5%, confirming that the heat resistance of the separator was poor.

In other words, the weight ratio of VA to MMA and the hydrolysis rate were confirmed to affect the dispersion stability of the slurry composition and the heat resistance of the separator.

On the other hand, when comparing Examples 1 and 5 and Comparative Examples 6 and 7 that differed only in TA content, in the case of Comparative Example 6, not containing TA, the median particle size of the inorganic particles in the slurry composition was larger than that in the case Examples 1 and 5, leading to a deterioration in dispersion stability.

In the case of Comparative Example 7, where the TA content was higher than that in the case of Examples 1 and 5, the median particle size of the inorganic particles in the slurry composition was small, confirming that the dispersion stability was poor. However, in terms of heat shrinkage rate, the heat shrinkage rate in the TD direction of the separator was increased to 5.5, confirming that the heat resistance of the separator was poor.

In other words, the TA content was confirmed to affect the dispersion stability of the slurry composition and the heat resistance of the separator.

As a result, the copolymers corresponding to Examples 1 to 5 were confirmed to improve the dispersion stability of the slurry composition. Additionally, the slurry compositions and separators, using the copolymers of Examples 1 to 5, were confirmed to have balanced adhesive strength and heat resistance, compared to the slurry compositions and separators, using the copolymers of Comparative Examples 1 to 7.

The scope of the present disclosure is defined by the appended claims rather than the detailed description presented above. All changes or modifications derived from the meaning and scope of the claims and the concept of equivalents should be construed to fall within the scope of the present disclosure.

## Industrial Applicability

A copolymer of the present disclosure is capable of improving the dispersion stability of a slurry composition, increasing adhesive strength to a polyolefin film, which is a separator substrate, and improving the heat resistance of a separator.

## Claims

1. A copolymer comprising:

   a vinyl acetate-based monomer unit in an amount of 3 wt% or greater and 38 wt% or less;
   a vinyl alcohol-based monomer unit in an amount of 57 wt% or greater and 81 wt% or less
   an acrylate-based monomer unit in an amount of 0.7 wt% or greater and 18 wt% or less;
   an acrylic acid-based monomer unit in an amount of 14 wt% or greater and 38 wt% or less; and
   an amine-based organic compound in an amount of less than 1 wt%, based on 100 wt% of the total weight of the copolymer.

2. The copolymer of claim 1, wherein the copolymer is represented by Formula 1,

[Formula 1]

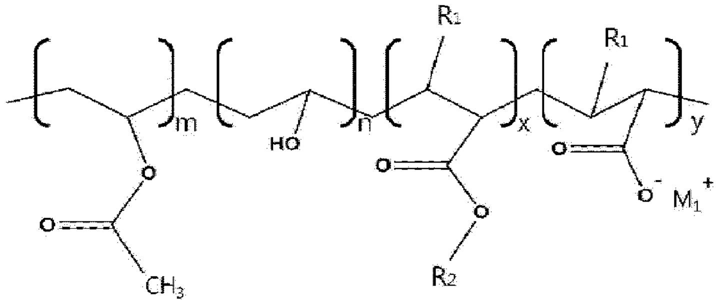

   where in Formula 1, $R_1$ is hydrogen or a straight-chain or branched-chain hydrocarbon having 1 to 4 carbon atoms,
   each $R_2$ is hydrogen or a straight-chain or branched-chain hydrocarbon having 1 to 20 carbon atoms,
   $M_1$ comprises one or more selected from the group consisting of secondary and tertiary amines, and
   m, n, x, and y satisfy $m + n + x + y = 1$.

**3.** The copolymer of claim 2, wherein $R_1$ in Formula 1 comprises one or more selected from the group consisting of hydrogen, methyl, and ethyl, and
$R_2$ in Formula 1 comprises one or more selected from the group consisting of methyl, ethyl, n-propyl, isopropyl, n-butyl, tert-butyl, n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, isopentyl, isoheptyl, isooctyl, isononyl, isodecyl, isoundecyl, isododecyl, isotridecyl, isotetradecyl, isopentadecyl, isocetyl, isohexadecyl, isoheptadecyl, isostearyl, isooctadecyl, isononadecyl, isoicosyl, isohenicosyl, and isodocosyl.

**4.** The copolymer of claim 2, wherein $M_1$ in Formula 1 comprises one or more selected from the group consisting of compounds of Formulas 2 to 5,

[Formula 2]

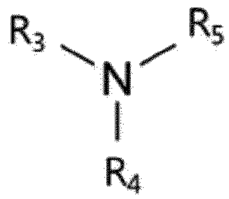

[Formula 3]

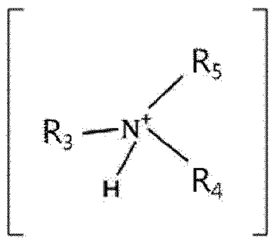

where in Formulas 2 and 3, $R_3$ to $R_5$ are each independently a straight-chain or branched-chain hydrocarbon having 1 to 6 carbon atoms,

[Formula 4]

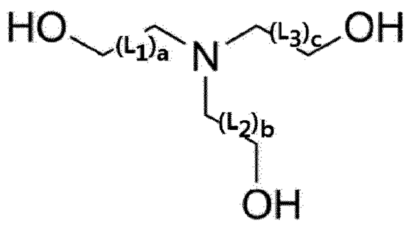

[Formula 5]

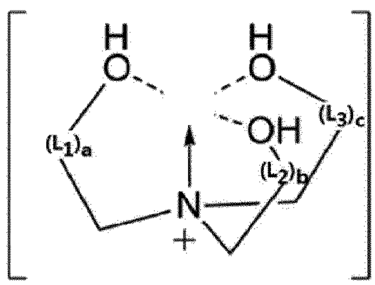

where in Formulas 4 and 5, $L_1$ to $L_3$ are each independently an alkylene group having 1 to 6 carbon atoms, and

a to c are each independently an integer of 0 to 2.

**5.** The copolymer of claim 1, wherein the copolymer is a random or block copolymer.

**6.** The copolymer of claim 1, wherein the copolymer has a number average molecular weight in a range of 5,000 to 1,000,000.

**7.** The copolymer of claim 2, wherein m, n, x, and y in Formula 1 satisfy the following expressions:

$$1.5 \leq (m + n)/(x + y) \leq 5.5,$$

$$0.05 \leq m/n \leq 0.45,$$

and

$$0.05 \leq x/y \leq 0.45.$$

**8.** A slurry composition comprising:

the copolymer of any one of claims 1 to 7; and
inorganic particles.

**9.** A separator comprising the slurry composition of claim 8.

**10.** A secondary battery comprising the separator of claim 9.

## INTERNATIONAL SEARCH REPORT

International application No.
**PCT/KR2021/013434**

**A. CLASSIFICATION OF SUBJECT MATTER**

**C08F 216/06**(2006.01)i; **C08F 218/08**(2006.01)i; **C08F 220/06**(2006.01)i; **C08F 220/10**(2006.01)i; **C08L 29/04**(2006.01)i; **C08L 53/00**(2006.01)i; **C08J 5/22**(2006.01)i; **H01M 50/446**(2021.01)i

According to International Patent Classification (IPC) or to both national classification and IPC

**B. FIELDS SEARCHED**

Minimum documentation searched (classification system followed by classification symbols)

C08F 216/06(2006.01); H01G 9/02(2006.01); H01M 10/052(2010.01); H01M 10/0525(2010.01); H01M 2/14(2006.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공중합체(copolymer), 분리막(separator), 내열성(heat resistance), 리튬 이차전지 (lithium secondary battery), 비닐 아세테이트(vinyl acetate), 비닐 알코올(vinyl alcohol), 아크릴레이트(acrylate), 아크릴산 (acrylic acid), 아민계 유기 화합물(amine-based organic compound)

**C. DOCUMENTS CONSIDERED TO BE RELEVANT**

| Category* | Citation of document, with indication, where appropriate, of the relevant passages | Relevant to claim No. |
|---|---|---|
| A | KR 10-2017-0037453 A (SAMSUNG ELECTRONICS CO., LTD. et al.) 04 April 2017 (2017-04-04)<br>See claims 1-3 and 22; paragraph [0055]; and examples 1 and 7. | 1-10 |
| A | KR 10-2012-0093772 A (LG CHEM, LTD.) 23 August 2012 (2012-08-23)<br>See entire document. | 1-10 |
| A | KR 10-2009-0123894 A (CHANGZHOU ZHONGKE LAIFANG POWER SCIENCE & TECHNOLOGY CO., LTD.) 02 December 2009 (2009-12-02)<br>See entire document. | 1-10 |
| A | KR 10-2014-0116415 A (SIHL GMBH) 02 October 2014 (2014-10-02)<br>See entire document. | 1-10 |
| A | KR 10-2013-0052406 A (LG CHEM, LTD.) 22 May 2013 (2013-05-22)<br>See entire document. | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 September 2022** | **02 September 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2021/013434**

| Patent document cited in search report | Publication date (day/month/year) | Patent family member(s) | Publication date (day/month/year) |
|---|---|---|---|
| KR 10-2017-0037453 A | 04 April 2017 | CN 106887552 A | 23 June 2017 |
| | | CN 106887552 B | 12 November 2021 |
| | | EP 3147966 A1 | 29 March 2017 |
| | | EP 3147966 B1 | 19 December 2018 |
| | | US 10490794 B2 | 26 November 2019 |
| | | US 2017-0092915 A1 | 30 March 2017 |
| KR 10-2012-0093772 A | 23 August 2012 | CN 103477491 A | 25 December 2013 |
| | | CN 103477491 B | 23 September 2015 |
| | | EP 2677590 A2 | 25 December 2013 |
| | | EP 2677590 B1 | 03 April 2019 |
| | | HU E044656 T2 | 28 November 2019 |
| | | JP 2014-505344 A | 27 February 2014 |
| | | JP 5976015 B2 | 23 August 2016 |
| | | KR 10-1254693 B1 | 15 April 2013 |
| | | TW 201246663 A | 16 November 2012 |
| | | TW I469425 B | 11 January 2015 |
| | | US 2014-0050965 A1 | 20 February 2014 |
| | | US 2015-0349312 A1 | 03 December 2015 |
| | | US 9130215 B2 | 08 September 2015 |
| | | US 9954211 B2 | 24 April 2018 |
| | | WO 2012-111956 A2 | 23 August 2012 |
| | | WO 2012-111956 A3 | 20 December 2012 |
| KR 10-2009-0123894 A | 02 December 2009 | CN 101226994 A | 23 July 2008 |
| | | CN 101226994 B | 30 June 2010 |
| | | DE 112008001340 B4 | 31 May 2012 |
| | | DE 112008001340 T5 | 22 April 2010 |
| | | JP 2010-520591 A | 10 June 2010 |
| | | JP 5226704 B2 | 03 July 2013 |
| | | KR 10-1085692 B1 | 22 November 2011 |
| | | WO 2009-079889 A1 | 02 July 2009 |
| KR 10-2014-0116415 A | 02 October 2014 | CN 104115306 A | 22 October 2014 |
| | | CN 104115306 B | 26 June 2018 |
| | | DE 102012000910 A1 | 25 July 2013 |
| | | EP 2805366 A1 | 26 November 2014 |
| | | EP 2805366 B1 | 24 August 2016 |
| | | JP 2015-504234 A | 05 February 2015 |
| | | JP 6225119 B2 | 01 November 2017 |
| | | KR 10-2014566 B1 | 26 August 2019 |
| | | US 2015-0030933 A1 | 29 January 2015 |
| | | US 9997755 B2 | 12 June 2018 |
| | | WO 2013-107911 A1 | 25 July 2013 |
| KR 10-2013-0052406 A | 22 May 2013 | None | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 101430975
- KR 1020060072065